# EUROPEAN PATENT APPLICATION

(11) **EP 2 687 996 A1**
(43) Date of publication of application: **22.01.2014**
(21) Application number: 12757296.4
(22) Date of filing: 13.03.2012
(51) Int. Cl.: G06F 17/30

(54) **METHOD AND SYSTEM FOR WEB PAGE REARRANGEMENT**

(30) Priority: 14.03.2011 CN 201110060341
(71) Applicant: Xiaomi Inc., Beijing 100085 (CN)
(72) Inventor: FAN, Dian, Beijing 100085 (CN); WANG, Xuanran, Beijing 100085 (CN); QI, Dongjie, Beijing 100085 (CN); HONG, Feng, Beijing 100085 (CN); QU, Heng, Beijing 100085 (CN); HUANG, Jiangji, Beijing 100085 (CN)
(74) Representative: Spachmann, Holger
(86) International application number: PCT/CN2012/072281
(87) International publication number: WO 2012/122932

(57) **Abstract**

The present invention discloses a method and system for webpage resetting, which is suitable for mobile phone internet; in which the mobile phone IE client obtains a web address, inquires if a cache server has stored the reset webpage of said web address, and a cache server judges if the reset webpage of said web address has been stored.

If yes, the cache server will send the reset webpage to the mobile phone IE client for display; otherwise, the mobile phone IE client obtains the non-reset webpages correspondingly to the web address, then employs the preset webpage resetting strategy to reset the non-reset webpages correspondingly to the web address and generates and shows the reset webpages correspondingly to the web address. Meanwhile the reset webpages are uploaded to the cache server correspondingly to the web address.

With this technical scheme, the acceleration effect of the server could be maintained, and at the same time, the consumption of the server resources could be substantially reduced.

## Description

### Field of the Invention

The present disclosure relates to a mobile phone Internet technology, and more particularly to a method and a system for webpage resetting.

### Background Information

In the field of computer-based internet, server cache accelerator technology is widely applied in a broad range of mature server cache accelerator products. For example, SQUID & NGINX are used to implement server caching according to the following main strategy: the internet resources most frequently accessed by the users (e.g.: pictures and static webpages) are cached in a high-speed cache. As such technology is not required to transform any original WWW webpage, there is a very poor experience of accessing WWW webpages via mobile phones with a relatively small screen.

In the field of mobile phone-based internet, a server cache accelerator technology is represented by UCWEB explorer technology (UCWEB IE). According to its operating principle, the server's computing ability is used to capture WWW webpages for subsequent webpage resetting, which is optimizing a webpage's appearance on a given mobile phone screen. In view of hundreds of billions of Chinese webpages, the computing ability and network bandwidth of the servers will be consumed extensively with this model, and web crawlers are not welcomed in some websites. For these kind of websites, it is difficult to repeatedly capture the webpages via a proxy server. At the same time, this may cause waste of server resources considering that a large part of webpages are actually not accessed by mobile phone users.

### Summary of the Invention

The purpose of the present disclosure is to provide a method and a system for webpage resetting, which could maintain the server's acceleration effect and also significantly reduce the consumption of server resources.

To this end, the present disclosure adopts the following technical scheme:

A method for webpage resetting suitable for mobile phone internet, comprising the following steps:
A. A mobile phone IE client obtains the web address;
B. The mobile phone IE client inquires if a cache server has stored the reset webpage of the web address. The cache server judges if the reset webpage of the web address has been stored. If yes, the cache server will send the reset webpage to the mobile phone IE client, which will show the reset webpage; otherwise, go to step C;
C. Mobile phone IE client obtains the non-reset webpages correspondingly to the web address;
D. Mobile phone IE client employs the preset webpage resetting strategy to reset the non-reset webpages correspondingly to the web address, generates the reset webpages correspondingly to the web address and shows the reset webpages;
E. Mobile phone IE client uploads to the cache server the reset webpages correspondingly to the web address.

The webpage resetting strategy can further include: content extraction, running web script language and removing ads.

The preset webpage resetting strategy can be stored in the mobile phone IE client.

The cache server regularly can clean outdated cache webpages.

In a further aspect a system for webpage resetting suitable for mobile phone Internet is proposed, which consists of a mobile phone IE client and a cache server; the mobile phone IE client and the cache server are connected via a network; the mobile phone IE client is used to obtain and display a reset webpages correspondingly to the web address. According to a webpage resetting strategy, the reset webpages are generated from non-reset webpages correspondingly to the web address, and uploaded to the cache server; the cache server is used to store the reset webpages correspondingly to the web address, and send the reset webpages to the mobile phone IE client.

With this technical scheme of the present disclosure, the acceleration effect of the server could be maintained, and at the same time, the webpage resetting that consumes computing resources and network bandwidth (running the script of JAVAS-CRIPT, utilization of CSS webpage templates, downloading flash and uploading ads pictures, etc.) are distributed to various mobile phones on demand, thus greatly reducing the consumption of server resources, especially for news, blogs and series of fiction websites that require little change of webpage contents.

### Description of the drawings

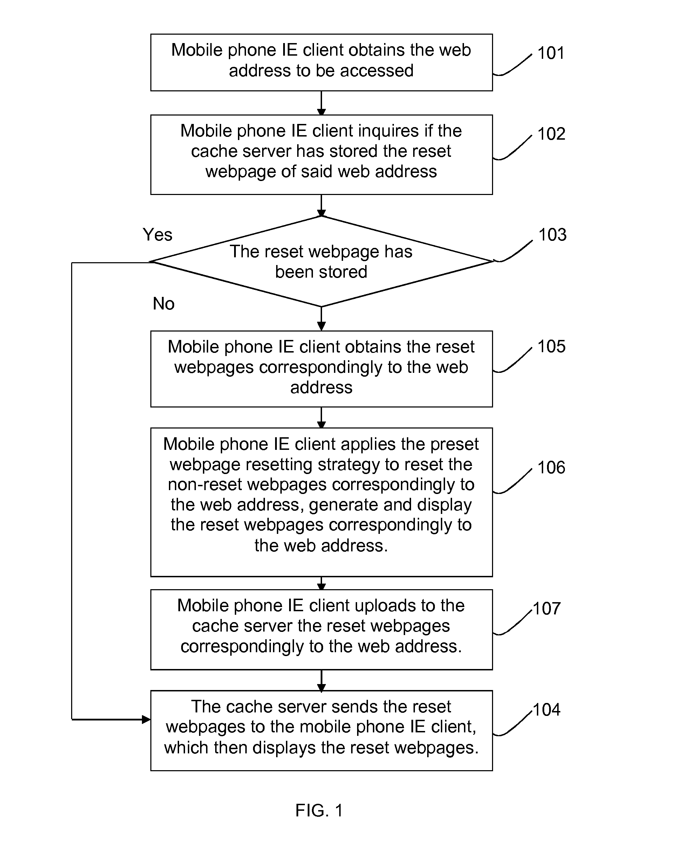

Figure 1 is a flow process chart of the webpage resetting in the preferred embodiment of the present disclosure.

### Detailed Description of the preferred embodiments

The preferred embodiment of the technical scheme of the present disclosure is further described with reference to the accompanying drawings.

According to a main concept of the technical scheme of the present disclosure, a system suitable for a webpage resetting of mobile phone Internet is applied to maintain the acceleration effect of a server, and also, upon demand, distribute to various mobile phones the webpage resetting functions that consume computer resources and network bandwidth.

The system consists of a mobile phone IE client and a cache server. The mobile phone IE client and the cache server are connected via a network; the mobile phone IE client is used to obtain and display a reset webpages correspondingly to a web address. According to the webpage resetting strategy, reset webpages are generated from non-reset webpages correspondingly to the web address, and uploaded to the cache server; the cache server is used to store the reset webpages correspondingly to the web address, and send the reset webpages to the mobile phone IE client.

Figure 1 is a flow process chart of the webpage resetting in the preferred embodiment of the present disclosure. As shown in FIG. 1, the webpage resetting process includes:
- Step 101:: the mobile phone IE client obtains a web address to be accessed.
- Step 102:: the mobile phone IE client inquires if a cache server has stored a reset webpage of said web address.
- Step 103:: the cache server judges if the reset webpage of the web address has been stored. If yes, go to step 104; otherwise go to step 105.
- Step 104:: the cache server sends the reset webpages to the mobile phone IE client, which then displays the reset webpages.
- Step 105:: the mobile phone IE client obtains the reset webpages correspondingly to the web address.
- Step 106:: mobile phone IE client applies the preset webpage resetting strategy to reset the non-reset webpages correspondingly to the web address, generates reset webpages correspondingly to the web address, and shows the reset webpages. The preset webpage resetting strategy is stored in the mobile phone IE client, including: content extraction, running web script language and removing ads, etc..
- Step 107:: mobile phone IE client uploads to the cache server the reset webpages correspondingly to the web address.

The cache server can regularly clean the expired cache webpages, of which the expiration policies could be referenced to HTTP standard (rfc2616), or set based on the website features.

The cache server can identify the user's screen size, mobile phone models and network environment, etc., and conduct multistage caching in view of different parameter configurations. For security reasons, the cache server does not cache webpages to which a user has logged on, so as to avoid disclosure of the user's privacy.

In addition, the cache server can actively or passively introduce new webpage resetting strategy to the mobile phone IE client.

Through trial and error, the webpages could be opened from 25 seconds to 5 seconds after acceleration, even under GPRS network environment; or opened immediately under WIFI environment. A piece of Sina news needs to download data from 900 KB to less than 100 KB, showing an obvious compression effect.

The above is a detailed description of the technical features of the present disclosure based on a typical preferred embodiment. However, it should be appreciated that the present disclosure is capable of a variety of embodiments and various modifications by those skilled in the art. All such variations or changes shall be embraced within the scope of the following claims.

## Claims

1. A method for webpage resetting suitable for a mobile phone internet, comprising:
A. obtaining a web address by a mobile phone IE client;
B. inquiring if a cache server has stored the reset webpage of the web address by a mobile phone IE client, whereby the cache server judges if the reset webpage of the web address has been stored and if the reset webpage has been stored, the cache server will send the reset webpage to the mobile phone IE client, which will show the reset webpage; otherwise, go to step C;
C. obtaining the non-reset webpages correspondingly to the web address by a mobile phone IE client;
D. employing a preset webpage resetting strategy to reset the non-reset webpages correspondingly to the web address by a mobile phone IE client, which generates the reset webpages correspondingly to the web address and shows the said reset webpages;
E. uploading the reset webpages correspondingly to the web address by a mobile phone IE client.

2. The method according to claim 1, wherein the webpage resetting strategy contains: content extraction, running web script language and removing ads.

3. The method according to claim 1 or claim 2, wherein the webpage resetting strategy is stored in the mobile phone IE client.

4. The method according to one of the aforementioned claims, wherein the cache server regularly cleans the expired cache webpages.

5. A system for webpage resetting suitable for mobile phone Internet, consisting of a mobile phone IE client and a cache server; the mobile phone IE client and the cache server are connected via a network; and the mobile phone IE client is used to obtain and display a reset webpages correspondingly to a web address, whereby according to the webpage resetting strategy, reset webpages are generated from non-reset webpages correspondingly to the web address, and uploaded to the cache server; the cache server is used to store the reset webpages correspondingly to the web address, and send the reset webpages to the mobile phone IE client.
